# EUROPÄISCHE PATENTSCHRIFT

(11) **EP 2 050 608 B1**
(45) Veröffentlichungstag und Bekanntmachung des Hinweises auf die Patenterteilung: **19.01.2011**
(21) Anmeldenummer: 08166003.7
(22) Anmeldetag: 07.10.2008
(51) Int. Cl.: B60K 6/383, B60K 6/387

(54) **Antriebssystem für ein Fahrzeug**
Drive system for a vehicle
Dispositif d'entraînement pour véhicule

(30) Priorität: 20.10.2007 DE 102007050236
(43) Veröffentlichungstag der Anmeldung: 22.04.2009
(73) Patentinhaber: ZF Friedrichshafen AG, 88038 Friedrichshafen (DE)
(72) Erfinder: Bartha, Alexander, 97082, Würzburg (DE); Großpietsch, Wolfgang, 97422, Schweinfurt (DE); Kleuker, Christoph, 97422, Schweinfurt (DE); Matschas, Steffen, 97469, Gochsheim (DE); Paone, Alessio, 97421, Schweinfurt (DE); Sudau, Jörg, 97464, Niederwerrn (DE); Orlamünder, Andreas, 97453, Schonungen (DE); Tögel, Matthias, 97711, Maßbach (DE); Niehaus, Udo, 97453, Schonungen (DE)

(56) Entgegenhaltungen:
- EP-A- 0 941 883
- WO-A-2006/079909
- US-A- 5 789 823

## Beschreibung

Die vorliegende Erfindung betrifft ein Antriebssystem für ein Fahrzeug, wie es beispielsweise im Rahmen eines Hybridmoduls zum Einsatz gelangen kann. Das Antriebssystem ist grundsätzlich mit einer nasslaufenden Lamellenkupplung als Anfahrkupplung ausgestaltet, was bedeutet, dass in einem Zustand, in welchem ein Antriebsdrehmoment von einem Antriebsaggregat, wie z.B. einer Brennkraftmaschine, geliefert wird, dieses Antriebsmoment über die nasslaufende Lamellenkupplung in Richtung zu einem Getriebe weitergeleitet wird. Ausgangsseitig ist diese nasslaufende Lamellenkupplung mit einer Rotoranordnung einer Elektromaschine gekoppelt, wodurch es möglich wird, über diese Elektromaschine eine Brennkraftmaschine zu starten, und auch möglich wird, ein zumindest unterstützendes Antriebsdrehmoment von der Elektromaschine in den im Momentenfluss folgenden Teil des Antriebsstrangs einzuleiten.

Ein solches Antriebssystem gemäß dem Oberbegriff des Anspruchs 1 ist aus der US 5,789,823 A bekannt. Ein von einem Antrieb oder von einer Elektromaschine abgegebenes Drehmoment wird auf ein Pumpenrad eines hydrodynamischen Drehmomentwandlers übertragen, und von dort aus in Abhängigkeit vom Schaltzustand zweier nasslaufender Lamellenkupplungen weitergeleitet. Die erste Lamellenkupplungen ist dem Antrieb und/oder der Elektromaschine zugeordnet, und kann eine Verbindung zwischen dem Antrieb und einem Abtrieb, wie einer Getriebeeingangswelle, herstellen. Diese Lamellenkupplung ermöglicht durch die Elektromaschine über einen hydrodynamischen Kreis des Drehmomentwandlers den Start des Antriebs, oder die Aktivierung der Bremswirkung des Antriebs am Abtrieb bei Schubbetrieb. Die zweite Lamellenkupplung ist dagegen zur Überbrückung des hydrodynamischen Kreises des Drehmomentwandlers vorgesehen. Jeder der beiden Lamellenkupplungen ist jeweils ein Beaufschlagungsorgan in Form eines Kolbens zugeordnet, durch welches in Abhängigkeit von seiner jeweiligen Position die Kupplung in einen Ein- oder in einen Ausrückzustand versetzt wird. Jedem der beiden Beaufschlagungsorgane ist jeweils ein Vorspannelement zugeordnet, das die jeweilige Lamellenkupplung in Ausrückposition halten soll. Mit dem jeweiligen Vorspannelement wirkt jeweils ein Druckfluidraum zusammen, der jeweils über eine zugeordnete Druckfluidspeiseleitung versorgt werden muss. Die Beaufschlagung der jeweils zu versorgenden Druckfluidspeiseleitung erfolgt entsprechend einer dem Getriebe zugeordneten Steuerung oder Regelung.

Es ist die Aufgabe der vorliegenden Erfindung, ein Antriebssystem für ein Fahrzeug bereitzustellen, mit welchem bei Einsatz einer nasslaufenden Lamellenkupplung als Anfahrkupplung bzw. auch zum Durchführen von Schaltvorgängen ein geringstmöglicher Aufwand im Bereich der Druckfluidversorgung zu leisten ist.

Erfindungsgemäß wird diese Aufgabe durch die Merkmale des Anspruches 1 gelöst.

Das erfindungsmgemäße Antriebssystem umfasst zwei nasslaufende Lamellenkupplungen. Um die beiden nasslaufenden Lamellenkupplungen in einen Einrückzustand bzw. Ausrückzustand zu bringen, also die jeweiligen Lamellenpakete durch Beaufschlagung gegeneinander zu pressen, wird vorgeschlagen, dass die erste nasslaufende Lamellenkupplung und die zweite nasslaufende Lamellenkupplung jeweils ein die antriebsseitigen und abtriebsseitigen Lamellenpakete in Reibeingriff pressendes Beaufschlagungsorgan aufweisen.

Dabei ist vorzugsweise die zweite nasslaufende Lamellenkupplung als so genannte Normal-Geschlossen-Kupplung ausgebildet, nämlich dadurch, dass das Beaufschlagungsorgan der zweiten nasslaufenden Lamellenkupplung in Richtung Einrücken vorgespannt ist.

Die primär als Anfahrkupplung bzw. zur Durchführung von Schaltvorgängen eingesetzte erste nasslaufende Lamellenkupplung ist vorzugsweise als so genannte Normal-Offen-Kupplung ausgestaltet, nämlich dadurch, dass das Beaufschlagungsorgan der ersten nasslaufenden Lamellenkupplung in Richtung Ausrücken vorgespannt ist.

Um bei den beiden nasslaufenden Lamellenkupplungen die erforderlichen Betätigungsvorgänge durchführen zu können, wird weiter vorgeschlagen, dass die Beaufschlagungsorgane durch Fluiddruck entgegen ihrer jeweiligen Vorspannung beaufschlagbar sind, wobei weiterhin vorgesehen ist, dass die erste nasslaufende Lamellenkupplung und die zweite nasslaufende Lamellenkupplung jeweils einen Druckfluidraum zur Aufnahme von das jeweilige Beaufschlagungsorgan beaufschlagendem Druckfluid aufweisen. Um dabei den ansteuerungstechnischen Aufwand der beiden nasslaufenden Lamellenkupplungen so gering als möglich zu halten, ist weiter vorgesehen, dass der Druckfluidraum der ersten nasslaufenden Lamellenkupplung und der Druckfluidraum der zweiten nasslaufenden Lamellenkupplung miteinander in Verbindung stehen und über eine gemeinsame Druckfluidspeiseleitung mit unter Druck stehendem Fluid speisbar sind. Dies hat zur Folge, dass allein durch die Variation des Fluiddrucks über die. Druckfluidspeiseleitung bei beiden nasslaufenden Lamellenkupplungen den jeweiligen Druckverhältnissen angepasste Stellvorgänge ausgelöst werden können.

Um hierbei unterschiedliche Zustände zu erlangen, in welchen einmal ein Antriebsdrehmoment beispielsweise durch eine Brennkraftmaschine über die erste nasslaufende Lamellenkupplung geleitet wird, ein anderes Mal ein Antriebsdrehmoment über die Elektromaschine eingeleitet wird und in einem dritten Fall ein Bremsmoment genutzt wird, wozu es erforderlich ist, die beiden nasslaufenden Lamellenkupplungen teilweise gegenläufig zu schalten, wird vorgeschlagen, dass einerseits die auf das Beaufschlagungsorgan der zweiten nasslaufenden Lamellenkupplung einwirkende Vorspannung und die auf dieses Beaufschlagungsorgan einwirkende Druckfluidkraft so aufeinander abgestimmt sind und andererseits die auf das Beaufschlagungsorgan der ersten nasslaufenden Lamellenkupplung einwirkende Vorspannung und die auf dieses Beaufschlagungsorgan einwirkende Druckfluidkraft so aufeinander abgestimmt sind, dass bei Erhöhung des Fluiddrucks zunächst die zweite nasslaufende Lamellenkupplung in einen zumindest teilweise ausgerückten Zustand gebracht wird und bei weiter ansteigendem Fluiddruck die erste nasslaufende Lamellenkupplung in einen zumindest teilweise eingerückten Zustand gebracht wird. Eine sowohl axial, als auch radial sehr kompakte Bauweise kann dadurch erlangt werden, dass die Rotoranordnung der Elektromaschine und eine Statoranordnung der Elektromaschine die erste nasslaufende Lamellenkupplung und die Überbrückungsanordnung radial außen umgebend angeordnet sind.

Die vorliegende Erfindung wird nachfolgend mit Bezug auf die beiliegenden Zeichnungen detailliert erläutert. Es zeigt:
- Fig. 1: eine Prinzipdarstellung eines erfindungsgemäß aufgebauten An- triebssystems im Längsschnitt;
- Fig. 2: das Antriebssystem der Fig. 1 in einem Zustand, in welchem eine Elektromaschine ein Antriebsdrehmoment liefert;
- Fig. 3: das in Fig. 1 gezeigte Antriebssystem in einem Zustand, in wel- chem eine Brennkraftmaschine ein Antriebsdrehmoment liefert;
- Fig. 4: das in Fig. 1 gezeigte Antriebssystem in einem Zustand, in wel- chem ein Bremsmoment der Brennkraftmaschine genutzt wird;
- Fig. 5: eine Teil-Längsschnittansicht einer konstruktiven Ausgestal- tungsvariante eines in Fig. 1 gezeigten Antriebssystems.

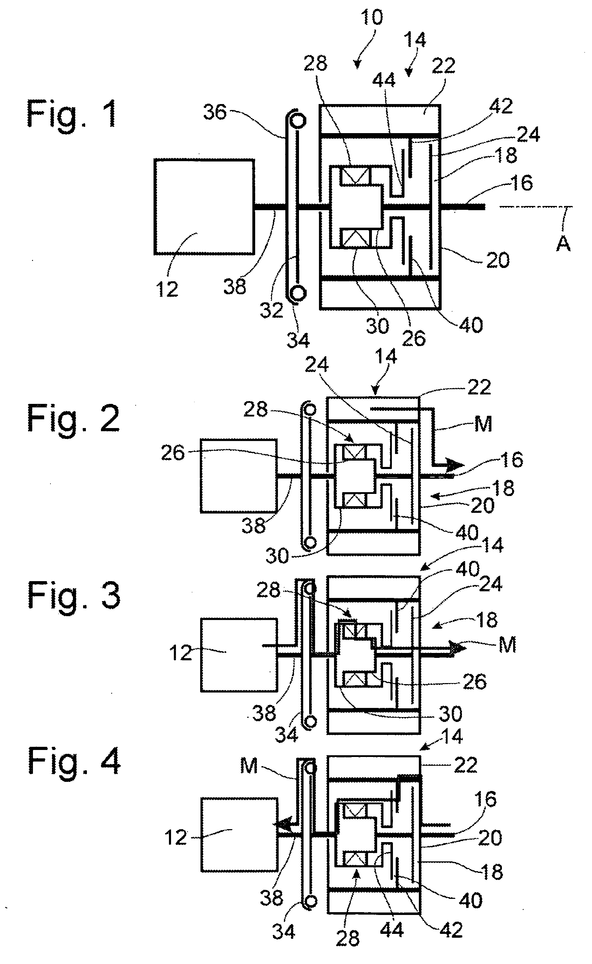

Die Fig. 1 zeigt ein erfindungsgemäß ausgestaltetes Antriebssystem in prinzipartiger Darstellung. Dieses Antriebssystem 10 dient primär dazu, ein Drehmoment zwischen einem beispielsweise als Brennkraftmaschine ausgebildeten Antriebsaggregat 12 oder einer Elektromaschine 14 auf eine Abtriebswelle 16 oder ein sonstiges Abtriebsorgan zu übertragen. Diese Abtriebswelle 16 kann beispielsweise die Eingangswelle eines Getriebes sein.

Hierzu weist das Antriebssystem 10 als elementare Baugruppe eine erste nasslaufende Lamellenkupplung 18 auf. Ein Ausgangsbereich 20 derselben ist mit dem Abtriebsorgan 16, also beispielsweise einer Getriebeeingangswelle, zur gemeinsamen Drehung gekopppelt. Ebenso ist eine Rotoranordnung 22 der Elektromaschine 14 mit dem Abtriebsorgan 16 bzw. auch dem Ausgangsbereich 20 der ersten nasslaufenden Lamellenkupplung 18 gekoppelt.

Ein Eingangsbereich 24 dieser ersten nasslaufenden Lamellenkupplung 18 ist mit dem Ausgangsbereich 26 einer allgemein mit 28 bezeichneten Freilaufanordnung zur gemeinsamen Drehung um eine Drehachse A gekoppelt. Ein Eingangsbereich 30 der Freilaufanordnung 28 ist im dargestellten Beispiel mit einer Sekundärseite 32 einer allgemein mit 34 bezeichneteten Torsionsschwingungsdämpferanordnung, also beispielsweise Zweimassenschwungrad oder Gasfeder-Zweimassenschwungrad, gekoppelt. Eine Primärseite 36 dieses Zweimassenschwungrads 34 ist mit einer als Antriebsorgan hier wirksamen Antriebswelle 38, beispielsweise Kurbelwelle der Brennkraftmaschine 12, zur gemeinsamen Drehung um die Drehachse A gekoppelt.

Es ist weiterhin eine Überbrückungskupplungsanordnung 40 vorgesehen, deren Eingangsbereich 42 mit dem Abtriebsorgan 16, mithin also auch der Rotoranordnung 22 der Elektromaschine 14 und dem Ausgangsbereich 20 der ersten nasslaufenden Lamellenkupplung 18 zur gemeinsamen Drehung um die Drehachse A gekoppelt. Ein Ausgangsbereich 44 der Überbrückungskupplungsanordnung 40 ist mit der Antriebswelle 38, hier über die Torsionsschwingungsdämpferanordnung 34, und somit auch dem Eingangsbereich 30 der Freilaufanordnung 28 zur gemeinsamen Drehung gekoppelt.

Mit einem derartig aufgebauten Antriebssystem 10 lassen sich die nachfolgend mit Bezug auf die Fig. 2 bis 4 dargestellten Betriebsarten einstellen. Dabei ist in diesen Figuren jeweils ein mit M bezeichneter Pfeil erkennbar, welcher den Drehmomentenfluss in den verschiedenen Zuständen repräsentiert.

Die Fig. 2 zeigt den Zustand, in welchem ein Antriebsdrehmoment von der Elektromaschine 14 geliefert wird, mithin also die Rotoranordnung 22 der Elektromaschine 14 den Ausgangsbereich 20 der ersten nasslaufenden Lamellenkupplung 18 und das Abtriebsorgan 16 in Drehung versetzt. Die Überbrückungskupplungsanordnung 40 ist ausgerückt, kann also kein Drehmoment übertragen. Auch die erste nasslaufende Lamellenkupplung 18 ist in diesem Zustand ausgerückt, so dass sie ebenfalls im Wesentlichen kein Drehmoment auf deren Eingangsbereich 24 übertragen kann. Die durch Scherkräfte und sonstige fluidische Schleppmomente generierte Drehmomentenwechselwirkung zwischen dem Ausgangsbereich 20 und dem Eingangsbereich 24 der ersten nasslaufenden Lamellenkupplung 18 übertragenen Kräfte werden nicht weiter in Richtung Antriebsorgan 38 geleitet, da die Freilaufanordnung 28 kein Drehmoment von ihrem Ausgangsbereich 26 auf ihren Eingangsbereich 30 übertragen kann. Das heißt, in einem Zustand, in welchem ein Antriebsdrehmoment M primär durch die Elektromaschine 14 bereitgestellt wird, werden im Wesentlichen keine den Wirkungsgrad mindernde Schleppmomente erzeugt, da die Freilaufanordnung 28 in diesem Zustand im Wesentlichen frei drehen kann.

In dem in Fig. 3 gezeigten Zustand wird ein Antriebsdrehmoment von der Brennkraftmaschine 12 über die Antriebswelle 38 und die Torsionsschwingungsdämpferanordnung 34 eingeleitet, und zwar in den Eingangsbereich 30 der Freilaufanordnung 28. In diesem Zustand sperrt die Freilaufanordnung 28 und überträgt das Drehmoment weiter auf ihren Ausgangsbereich 26 in Richtung zum Eingangsbereich 24 der ersten nasslaufenden Lamellenkupplung 18. Je nachdem, ob diese im Ein- oder Ausrückzustand ist, wird dieses Drehmoment M dann weiter auf das Abtriebsorgan 16 übertragen. Durch die bekanntermaßen steuerbare oder regelbare Drehmomentübertragungskapazität einer derartigen nasslaufenden Lamellenkupplung 18 können dann Anfahrvorgänge bzw. Schaltvorgänge in einem Getriebe durchgeführt werden. In diesem in Fig. 3 gezeigten Zustand ist die Überbrückungskupplungsanordnung 40 in einem Ausrückzustand, während gleichzeitig die Elektromaschine 14 deaktiviert ist oder ggf. dazu genutzt wird, im Generatorbetrieb eine Batterie zu laden oder eine Versorgungsspannung für das Bordsystem zu erzeugen.

Die Fig. 4 zeigt einen Zustand, in welchem weder die Brennkraftmaschine 12, noch die Elektromaschine 14 ein Antriebsmoment liefert. Das hier erkennbare Moment M ist ein Bremsmoment, was bedeutet, dass ein Fahrzeug sich in einem Schubzustand befindet. Da dieses Bremsmoment nicht über die erste nasslaufende Lamellenkupplung 18 und die Freilaufanordnung 28 geleitet werden kann, wird in diesem Schubzustand die Überbrückungskupplungsanordnung 40 in einen Einrückzustand gebracht, so dass der Drehmomentenfluss über den Eingangsbereich 20 der ersten nasslaufenden Lamellenkupplung 18 bzw. die Rotoranordnung 22 der Elektromaschine 14, den Eingangsbereich 42 der Überbrückungskupplungsanordnung 40, den Ausgangsbereich 44 dieser Überbrückungskupplungsanordnung 40 und unter Überbrückung oder Umgehung der Freilaufanordnung 28 über die Torsionsschwingungsdämpferanordnung 34 auf die Antriebswelle 38 und mithin die Brennkraftmaschine 12 übertragen wird. In diesem Zustand ist dann vorzugsweise die erste nasslaufende Lamellenkupplung 18 ausgerückt.

Mit dem vorangehend beschriebenen grundsätzlichen Aufbau eines erfindungsgemäßen Antriebssystems 10 wird es also möglich, sowohl im Antriebszutand, in welchem eine Elektromaschine 14 ein Antriebsdrehmoment liefert, als auch in einem Antriebszustand, in welchem eine Brennkraftmaschine 12 ein Antriebsdrehmoment liefert, sehr effizient zu arbeiten und möglicherweise auftretende Verluste durch Fluidumwälzung bzw. Scherkräfte zu vermeiden. Gleichwohl wird es durch den Einsatz der Überbrückungskupplungsanordnung 40 möglich, unter Umgehung der ansonsten eine Drehmomentanbindung der Brennkraftmaschine 12 realisierenden Freilaufanordnung 28 den Motorbremseffekt zu nutzen. Gleichzeitig ist es möglich, bei eingerückter Überbrückungskupplungsanordnung 40 durch Erregen der Elektromaschine 14 ein Drehmoment in die Brennkraftmaschine 12 einzuleiten und diese zu starten.

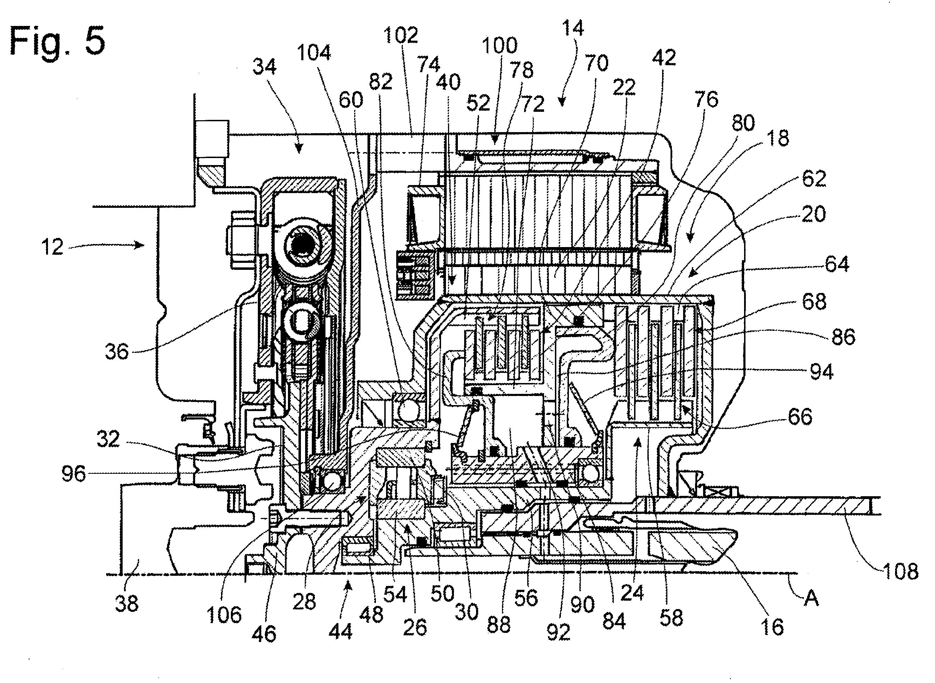

Eine konstruktive Ausgestaltungsform eines derart aufgebauten Antriebssystems ist in Fig. 5 gezeigt. Man erkennt links den Endbereich der als Antriebswelle 38 wirksamen Kurbelwelle einer Brennkraftmaschine 12 und daran anschließend die Torsionsschwingungsdämpferanordnung 34 mit ihrer Primärseite 36 und ihrer Sekundärseite 32. Es sei hier darauf hingewiesen, dass der Aufbau der Torsionsschwingungsdämpferanordnung 34 herkömmlich ist, im dargestellten Falle beispielsweise ein zweistufiger Dämpfer gewählt ist. Die hier primär mit einem Scheibenelement 46 ausgebildete Sekundärseite 32 ist mit einem topfartig bzw. gehäuseartig ausgebildeten Bauteil 48 beispielsweise durch Schraubbolzen fest verbunden, welches einerseits mit einem Freilaufaußenring 50 drehfest gekoppelt ist, und andererseits in seinem radial äußersten Bereich einen Lamellentrageabschnitt 52 bereitstellt. Ein Freilaufinnenring 54 ist an einem Übertragungselement 56 drehfest getragen, welches an seinem anderen Endbereich einen weiteren Lamellentrageabschnitt 58 bereitstellt.

Auf dem beispielsweise auch aus mehreren Teilen zusammengefügten Bauteil 48 ist über ein Drehentkopplungslager 60 eine Lamellenträgerbaugruppe 62 drehbar getragen. Diese Lamellenträgerbaugruppe 62 stellt in einem radial äußeren und in der Fig. 5 rechts liegenden Bereich einen weiteren Lamellentrageabschnitt 64 bereit. Die beiden Lamellentrageabschnitte 58 und 64 sind dabei der ersten nasslaufenden Lamellenkupplung 18 zugeordnet und tragen ein antriebsseitiges Lamellenpaket 66, hier ausgebildet als Innenlamellen, sowie ein abtriebsseitiges Lamellenpaket 68, hier ausgebildet als Außenlamellen. In bekannter Art und Weise wechseln die einzelnen Lamellen der Lamellenpakete einander ab, so dass jeweils eine Lamelle des antriebsseitigen Lamellenpakets 66 zumindest an einer Seite einer Lamelle des abtriebsseitigen Lamellenpakets 68 gegenüberliegt.

Die Lamellenträgerbaugruppe 62, die im Wesentlichen gehäuseartig ausgebildet ist, weist in ihrem Innenbereich ein darin fest getragenes Einsatzelement 70 auf. Dieses stellt dem Lamellentrageabschnitt 52 radial innen gegenüberliegend einen weiteren Lamellentrageabschnitt 72 bereit. Die beiden Lamellentrageabschnitte 52 und 72 sind der Überbrückungskupplungsanordnung 40 zugeordnet, welche hier als eine zweite nasslaufende Lamellenkupplung 74 ausgebildet ist. Mit dem Lamellentrageabschnitt 72 des Einsatzelements 70 sind die Lamellen eines antriebsseitigen Lamellenpakets 76 der zweiten nasslaufenden Lamellenkupplung 74 drehfest gekoppelt. Mit dem Lamellentrageabschnitt 52 sind die Lamellen eines abtriebsseitigen Lamellenpakets 78 der zweiten nasslaufenden Lamellenkupplung 74 drehfest gekoppelt. Auch hier sind die Lamellen der beiden Lamellenpakete 76, 78 einander jeweils abwechselnd angeordnet.

Man erkennt aus der vorangehenden Beschreibung zunächst, dass das Übertragungselement 56 mit dem Lamellentrageabschnitt 58 und dem antriebsseitigen Lamellenpaket 66 der ersten nasslaufenden Lamellenkupplung 18 im Wesentlichen deren Eingangsbereich 24 bildet, während die Lamellenträgerbaugruppe 62 mit dem Lamellentrageabschnitt 64 und dem abtriebsseitigen Lamellenpaket 68 im Wesentlichen den Ausgangsbereich 20 bereitstellt. In gleicher Weise stellt die Lamellenträgerbaugruppe 62 mit dem am Einsatzteil 70 vorgesehenen Lamellentrageabschnitt 72 und dem antriebsseitigen Lamellenpaket 76 im Wesentlichen den Eingangsbereich 42 der Überbrückungskupplungsanordnung 40 bzw. der zweiten nasslaufenden Lamellenkupplung 74 bereit. Das Bauteil 48 stellt mit dem daran vorgesehenen Lamellentrageabschnitt 52 und dem abtriebsseitigen Lamellenpaket 78 im Wesentlichen den Ausgangsbereich 44 dieser zweiten nasslaufenden Lamellenkupplung 74 bereit.

Gleichermaßen stellt der Freilaufaußenring 50 im Wesentlichen den Eingangsbereich 30 der Freilaufanordnung 28 bereit, während der Freilaufinnenring 54 im Wesentlichen den Ausgangsbereich 26 der Freilaufanordnung 28 bereitstellt.

Jede der nasslaufenden Überbrückungskupplungen 18, 74 weist ein kolbenartig ausgestaltetes Beaufschlagungsorgan 80, 82 auf. Diese sind radial nach außen am Einsatzelement 70 und radial nach innen an einem mit dem Einsatzelement 70 fest verbundenen Abschlusselement 84 im Wesentlichen fluiddicht geführt, so dass in Zuordnung zu jeder der nasslaufenden Lamellenkupplungen 18, 74 ein Druckfluidraum 86 bzw. 88 gebildet ist. Über eine Verbindungsöffnung 90 sind diese beiden Druckfluidräume 86, 88 miteinander verbunden. Eine gemeinsame Druckfluidspeiseleitung 92 dient zur Druckfluidzufuhr zunächst in den Druckfluidraum 88 der zweiten nasslaufenden Lamellenkupplung 74 und über die Verbindungsöffnung 90 in den Druckfluidraum 86 der ersten nasslaufenden Lamellenkupplung 18. Ferner sind in Zuordnung zu den beiden kolbenartigen Beaufschlagungsorganen 80, 82 beispielsweise als Tellerfedern oder dergleichen ausgebildete Vorspannelemente 94, 96 vorgesehen. Das dem Beaufschlagungsorgan 80 der ersten nasslaufenden Lamellenkupplung 18 zugeordnete Vorspannelement 94 beaufschlagt dieses in Richtung Ausrücken, also in Richtung Minimierung des Volumens des Druckfluidraums 86 und in Richtung von den beiden Lamellenpaketen 66, 68 weg. Bei nicht vorhandenem oder vergleichsweise geringem Fluiddruck ist somit die erste nasslaufende Lamellenkupplung 18 in einem ausgerückten Zustand, in welchem eine Reibwechselwirkung zwischen den Lamellen der beiden Lamellenpakete 66, 68 im Wesentlichen nicht vorhanden ist.

Das Vorspannelement 96 der zweiten nasslaufenden Lamellenkupplung 74 spannt das zugeordnete Beaufschlagungsorgan 82 in Richtung Einrücken, also in Richtung auf die beiden Lamellenpakete 76, 78 zu, vor. Dies ist eine Richtung, in welcher auch das Volumen des Druckfluidraums 88 verringert bzw. minimiert wird. Bei zu geringem bzw. nicht vorhandenem Druckfluiddruck ist die zweite nasslaufende Lamellenkupplung 74 somit in einem Einrückzustand und kann ein Drehmoment zwischen der Lamellenträgerbaugruppe 62 und dem Bauteil 48 übertragen.

Man erkennt in der Fig. 5 weiter, dass die Rotoranordnung 22 der Elektromaschine 14 die als Kupplungsgehäuse wirksame Lamellenträgerbaugruppe 62 radial außen umgebend angeordnet und an dieser festgelegt ist. Eine Statoranordnung 100 der Elektromaschine 14 ist die Rotoranordnung 22 mit geringem radialen Abstand umgebend angeordnet und an einer feststehenden Baugruppe 102 getragen, ebenso wie ein scheibenartiges Stützelement 104, an welchem radial innen über ein weiteres Drehentkopplungslager 106 auch das Bauteil 48 gelagert und somit auch zentriert ist.

Es sei noch darauf hingewiesen, dass mit der gehäuseartig ausgestalteten und im Wesentlichen auch fluiddicht abgeschlossenen Lamellenträgerbaugruppe 62 ein als Hohlwellenabschnitt ausgebildetes Bauteil 108 fest verbunden ist, mit welchem wiederum die ebenfalls zur Fluidzufuhr zumindest teilweise als Hohlwelle ausgebildete Getriebeeingangswelle, also das Abtriebsorgan 16, drehfest gekoppelt ist.

Die vorangehend mit Bezug auf die Fig. 2 bis 4 beschriebenen Zustände können bei dem in Fig. 5 dargestellten Aufbau wie folgt realisiert werden:

Ist die Druckfluidspeiseleitung 92 im Wesentlichen drucklos geschaltet, so sind auch die beiden Druckfluidräume 86, 88 im Wesentlichen drucklos. Durch die Vorspannwirkung der Vorspannelemente 94, 96 sind die beiden Beaufschlagungsorgane 80, 82 in die vorangehend beschriebenen Zustände vorgespannt, d. h., die erste nasslaufende Lamellenkupplung 18 ist in einem Ausrückzustand, während die zweite nasslaufende Lamellenkupplung 74, also die Überbrückungskupplungsanordnung 40, in einem Einrückzustand ist. Dies entspricht dem in Fig. 4 gezeigten Fall, in welchem ein Drehmoment über das Abtriebsorgan 16, das Hohlwellenbauteil 108, die Lamellenträgerbaugruppe 62, die beiden Lamellenpakete 76, 78 und das Bauteil 48 über die Torsionsschwingungsdämpferanordnung 34 auf die Antriebswelle 38 geleitet werden kann. Es kann somit ein Motorbremseffekt genutzt werden. Auch kann in einem derartigen Zustand ein Antriebsdrehmoment der Elektromaschine 14 zum Anlassen der Brennkraftmaschine 12 genutzt werden.

Wird der Fluiddruck erhöht, so werden die beiden Beaufschlagungsorgane 80, 82 im Wesentlichen gleichermaßen mit einem Druck belastet. Dabei ist die Abstimmung der Vorspannkraft der jeweiligen Vorspannelemente 94, 96 auf die durch den Fluiddruck wirkende Kraft, die im Wesentlichen auch bestimmt ist durch die durch die Beaufschlagungselemente 80, 82 bereitgestellte druckbelastbare Fläche, derart, dass bei ansteigendem Druck zunächst das Vorspannelement 96 nachgibt, also die Überbrückungskupplungsanordnung 40 in einen Ausrückzustand gebracht wird, während bei diesem Druckniveau die erste nasslaufende Lamellenkupplung 18 noch ausgerückt bleibt. Dies entspricht dem Zustand der Fig. 2, in welchem keine der nasslaufenden Lamellenkupplungen 18, 74 ein Drehmoment überträgt und somit die Elektromaschine 14 dazu genutzt werden kann, ein Antriebsdrehmoment auf das Abtriebsorgan 16 zu leiten. Da in diesem Zustand zwar durch Schleppmomente ein geringes Drehmoment auf den Eingangsbereich 24 der nasslaufenden Lamellenkupplung 18 übertragen werden kann, wird nunmehr die Freilaufanordnung 28 wirksam, die dieses Drehmoment nicht in Richtung Bauteil 48 weiterleitet. Es kann zwar der Eingangsbereich 24 der ersten nasslaufenden Lamellenkupplung 18 mitrotieren, was jedoch im Wesentlichen keine Wirkungsgradverluste mit sich bringt.

Wird der Fluiddruck dann weiter erhöht, so wird auch die Vorspannkraft des Vorspannelements 94 überwunden und das Beaufschlagungsorgan 80 belastet die Lamellenpakete 66, 68 der ersten nasslaufenden Lamellenkupplung 18, so dass diese in einen Einrückzustand gelangt. Dies ist der Zustand der Fig. 3. Die zweite nasslaufende Lamellenkupplung 74 ist weiterhin in einem Ausrückzustand, kann also kein Drehmoment übertragen, während die Freilaufanordnung 28 sperrt und somit ein Antriebsdrehmoment von der Brennkraftmaschine 12 über die Torsionsschwingungsdämpferanordnung 34, die Freilaufanordnung 28 und die zweite nasslaufende Lamellenkupplung 18 auf das Abtriebsorgan 16 geleitet werden kann.

Durch das Umschalten zwischen diesen verschiedenen Druckbereichen wird es also möglich, drei Zustände zu erlangen, in welchen bei niedrigem Druck die erste nasslaufende Lamellenkupplung 18 ausgerückt ist, während die zweite nasslaufende Lamellenkupplung 74 eingerückt ist, bei mittlerem Druck beide nasslaufenden Lamellenkupplungen 18, 74 ausgerückt sind und bei höherem Druck die erste nasslaufende Lamellenkupplung 18 eingerückt bzw. in ihrem Drehmomentübertragungsvermögen steuerbar ist, während die zweite nasslaufende Lamellenkupplung 74 ausgerückt bleibt. Es ist selbstverständlich, dass die verschiedenen Druckbereiche einander überlappen können, so dass beispielsweise dann, wenn die zweite nasslaufende Lamellenkupplung 74 bei ansteigendem Druck beginnt, sich in einen Ausrückzustand zu bewegen, die erste nasslaufende Lamellenkupplung 18 bereits beginnt, sich in einen Einrückzustand zu bewegen.

Ein besonderer Vorteil der vorangehend beschriebenen Ausgestaltung liegt darin, dass bei nicht vorhandenem Fluiddruck, also beispielsweise auch außer Betrieb befindlichem Antriebssystem, die zweite nasslaufende Lamellenkupplung 74, also die Überbrückungskupplungsanordnung 40 eingerückt ist, während die erste nasslaufende Lamellenkupplung 18 ausgerückt ist. In diesem Zustand ist das System dazu bereit, ein Drehmoment von der Elektromaschine 14 zur Brennkraftmaschine zu leiten, und diese zu starten, ohne dass eine einen Fluiddruck bereitstellende Pumpe betrieben werden müsste. Sobald die Brennkraftmaschine läuft, kann beispielsweise durch Übergang in einen der in den Fig. 2 oder 3 gezeigten Zustände oder auch durch weiterhin fortgesetztes Erregen der Elektromaschine 14 bei nicht benötigtem Betrieb der Brennkraftmaschine eine in einem Getriebe angeordnete Pumpe beispielsweise durch die als Abtriebsorgan 16 dienende Getriebeeingangswelle oder das Hohlwellenbauteil 108 angetrieben werden, um den für möglicherweise durchzuführende Umschaltvorgänge erforderlichen Fluiddruck zu generieren. Grundsätzlich ist es auch möglich, einer derartigen Pumpe einen eigenständigen elektromotorischen Antrieb zuzuordnen, der schwächer dimensioniert sein kann, als die Elektromaschine 14, was insbesondere in einer Startphase zu einer erheblichen Entlastung des Bordspannungssystems beitragen kann.

Weiter sei darauf hingewiesen, dass die in der Fig. 5 dargestellte Anzahl der Lamellen der verschiedenen Lamellenpakete selbstverständlich variiert werden kann. Grundsätzlich ist es möglich, auch bei zumindest einem der Lamellenpakete nur eine einzige Lamelle vorzusehen.

## Patentansprüche

1. Antriebssystem für ein Fahrzeug, umfassend:
- eine erste nasslaufende Lamellenkupplung (18) zur wahlweisen Herstellung einer Drehmomentübertragungsverbindung zwischen einem Antriebsorgan (38) und einem Abtriebsorgan (16), wobei die erste nasslaufende Lamellenkupplung (18) einen Eingangsbereich (24) mit einem antriebsseitigen Lamellenpaket (66) und einen Ausgangsbereich (20) mit einem abtriebsseitigen Lamellenpaket (68) aufweist,
- eine Freilaufanordnung (28) mit einem mit dem Antriebsorgan (38) zu koppelnden Eingangsbereich (30) und einem mit dem Eingangsbereich (24) der ersten nasslaufenden Lamellenkupplung (18) gekoppelten Ausgangsbereich (26), wobei durch die Freilaufanordnung (28) ein Drehmoment im Wesentlichen nur von deren Eingangsbereich (30) auf deren Ausgangsbereich (26) übertragbar ist,
- eine Überbrückungskupplungsanordnung (40) mit einem mit dem Eingangsbereich (30) der Freilaufanordnung (28) gekoppelten Ausgangsbereich (44) und einem mit dem Ausgangsbereich (20) der ersten nasslaufenden Lamellenkupplung (18) gekoppelten Eingangsbereich (42), wobei die Überbrückungskupplungsanordnung (40) eine zweite nasslaufende Lamellenkupplung (74) umfasst, bei welcher der Eingangsbereich (42) ein antriebsseitiges Lamellenpaket (76) und der Ausgangsbereich (44) ein abtriebsseitiges Lamellenpaket (78) umfasst,
- eine Rotoranordnung (22) einer Elektromaschine (14), welche mit dem Eingangsbereich (30) der Überbrückungskupplungsanordnung (28) und dem Ausgangsbereich (20) der ersten nasslaufenden Lamellenkupplung gekoppelt (18) ist,
- wobei die erste nasslaufende Lamellenkupplung (18) und die zweite nasslaufende Lamellenkupplung (74) jeweils ein die antriebsseitigen und abtriebsseitigen Lamellenpakete (66, 68, 76, 78) in Reibeingriff pressenden Beaufschlagungsorgan (80, 82) aufweisen, die Beaufschlagungsorgane (80, 82) durch Fluiddruck entgegen ihrer jeweiligen Vorspannung beaufschlagbar sind, und die erste nasslaufende Lamellenkupplung (18) und die zweite nasslaufende Lamellenkupplung (74) jeweils einen Druckfluidraum (86, 88) zur Aufnahme von das jeweilige Beaufschlagungsorgan (80, 82) beaufschlagendem Druckfluid aufweisen, **dadurch gekennzeichnet,**
- **dass** das Beaufschlagungsorgan (80) der ersten nasslaufenden Lamellenkupplung (18) in Richtung Ausrücken und das Beaufschlagungsorgan (82) der zweiten nasslaufenden Lamellenkupplung (74) in Richtung Einrücken vorgespannt ist, und
- **dass** der Druckfluidraum (86) der ersten nasslaufenden Lamellenkupplung (18) und der Druckfluidraum (88) der zweiten nasslaufenden Lamellenkupplung (74) miteinander in Verbindung stehen und über eine gemeinsame Druckfluidspeiseleitung (92) mit unter Druck stehendem Fluid speisbar sind.

2. Antriebssystem nach Anspruch 1,
**dadurch gekennzeichnet,**
**dass** einerseits die auf das Beaufschlagungsorgan (82) der zweiten nasslaufenden Lamellenkupplung (74) einwirkende Vorspannung und die auf dieses Beaufschlagungsorgan (82) einwirkende Druckfluidkraft so aufeinander abgestimmt sind und andererseits die auf das Beaufschlagungsorgan (80) der ersten nasslaufenden Lamellenkupplung (18) einwirkende Vorspannung und die auf dieses Beaufschlagungsorgan (80) einwirkende Druckfluidkraft so aufeinander abgestimmt, dass bei Erhöhung des Fluiddrucks zunächst die zweite nasslaufende Lamellenkupplung (74) in einen zumindest teilweise ausgerückten Zustand gebracht wird und bei weiter ansteigendem Fluiddruck die erste nasslaufende Lamellenkupplung (18) in einen zumindest teilweise eingerückten Zustand gebracht wird.

## Claims

1. Drive system for a vehicle, comprising:
- a first wet-running multiplate clutch (18) for selectively producing a torque-transmitting connection between a drive input element (38) and a drive output element (16), with the first wet-running multiplate clutch (18) having an input region (24) with a drive-input-side plate pack (66) and having an output region (20) with a drive-output-side plate pack (68),
- a freewheel arrangement (28) having an input region (30) for coupling to the drive input element (38) and having an output region (26) which is coupled to the input region (24) of the first wet-running multiplate clutch (18), with it being possible for a torque to be transmitted by the freewheel arrangement (28) substantially only from the input region (30) thereof to the output region (26) thereof,
- a lockup clutch arrangement (40) having an output region (44) coupled to the input region (30) of the freewheel arrangement (28) and having an input region (42) coupled to the output region (20) of the first wet-running multiplate clutch (18), with the lockup clutch arrangement (40) comprising a second wet-running multiplate clutch (74) in which the input region (42) comprises a drive-input-side plate pack (76) and the output region (44) comprises a drive-output-side plate pack (78),
- a rotor arrangement (22) of an electric machine (14), which is coupled (18) to the input region (30) of the freewheel arrangement (28) and to the output region (20) of the first wet-running multiplate clutch (18),
- with the first wet-running multiplate clutch (18) and the second wet-running multiplate clutch (74) having in each case one load-exerting element (80, 82) which presses the drive-input-side and drive-output-side plate packs (66, 68, 76, 78) into frictional engagement, with it being possible for the load-exerting elements (80, 82) to be loaded by fluid pressure counter to their respective preload, and with the first wet-running multiplate clutch (18) and the second wet-running multiplate clutch (74) having in each case one pressurized fluid chamber (86, 88) for holding the pressurized fluid which acts on the respective load-exerting element (80, 82), **characterized**
- **in that** the load-exerting element (80) of the first wet-running multiplate clutch (18) is preloaded in the direction of disengagement and the load-exerting element (82) of the second wet-running multiplate clutch (74) is preloaded in the direction of engagement, and
- **in that** the pressurized fluid chamber (86) of the first wet-running multiplate clutch (18) and the pressurized fluid chamber (88) of the second wet-running multiplate clutch (74) are connected to one another and can be fed with pressurized fluid via a common pressurized fluid feed line (92).

2. Drive system according to Claim 1,
**characterized**
**in that** firstly the preload which acts on the load-exerting element (82) of the second wet-running multiplate clutch (74) and the pressurized fluid force acting on said load-exerting element (82) are coordinated with one another, and secondly the preload acting on the load-exerting element (80) of the first wet-running multiplate clutch (18) and the pressurized fluid force acting on said load-exerting element (80) are coordinated with one another, in such a way that, in the event of an increase in the fluid pressure, firstly the second wet-running multiplate clutch (74) is placed into an at least partially disengaged state, and in the event of a further increase in fluid pressure, the first wet-running multiplate clutch (18) is placed into an at least partially engaged state.

## Revendications

1. Système d'entraînement pour un véhicule automobile, comprenant :
- un premier embrayage multidisques humide (18) pour la création sélective d'une liaison à transfert de couple entre un organe d'entraînement (38) et un organe de sortie (16), le premier embrayage multidisques humide (18) présentant une région d'entrée (24) avec un paquet de disques (66) du côté de l'entraînement et une région de sortie (20) avec un paquet de disques (68) du côté de la sortie,
- un agencement de roue libre (28) avec une région d'entrée (30) à accoupler à l'organe d'entraînement (38) et une région de sortie (26) accouplée à la région d'entrée (24) du premier embrayage multidisques humide (18), un couple pouvant être transmis par l'agencement de roue libre (28) essentiellement seulement de sa région d'entrée (30) à sa région de sortie (26),
- un agencement d'embrayage de court-circuitage (40) avec une région de sortie (44) accouplée à la région d'entrée (30) de l'agencement de roue libre (28) et une région d'entrée (42) accouplée à la région de sortie (20) du premier embrayage multidisques humide (18), l'agencement d'embrayage de court-circuitage (40) comprenant un deuxième embrayage multidisques humide (74), dans lequel la région d'entrée (42) comprend un paquet de disques (76) du côté de l'entraînement et la région de sortie (44) comprend un paquet de disques (78) du côté de la sortie,
- un agencement de rotor (22) d'un moteur électrique (14), qui est accouplé à la région d'entrée (30) de l'agencement de roue libre (28) et à la région de sortie (20) du premier embrayage multidisques humide (18),
- le premier embrayage multidisques humide (18) et le deuxième embrayage multidisques humide (74) présentant à chaque fois un organe de sollicitation (80, 82) pressant en engagement de friction les paquets de disques du côté de l'entraînement et de la sortie (66, 68, 76, 78), les organes de sollicitation (80, 82) pouvant être sollicités par pression de fluide à l'encontre de leur précontrainte respective, et le premier embrayage multidisques humide (18) et le deuxième embrayage multidisques humide (74) présentant à chaque fois un espace de fluide sous pression (86, 88) pour recevoir le fluide sous pression sollicitant l'organe de sollicitation respectif (80, 82),
**caractérisé en ce que**
- l'organe de sollicitation (80) du premier embrayage multidisques humide (18) est précontraint dans la direction d'un débrayage et l'organe de sollicitation (82) du deuxième embrayage multidisques humide (74) est précontraint dans la direction d'un embrayage, et
- **en ce que** l'espace de fluide sous pression (86) du premier embrayage multidisques humide (18) et l'espace de fluide sous pression (88) du deuxième embrayage multidisques humide (74) sont en liaison l'un avec l'autre et peuvent être alimentés en fluide sous pression par le biais d'une conduite d'alimentation en fluide sous pression commune (92).

2. Système d'entraînement selon la revendication 1,
**caractérisé en ce que**
d'une part la précontrainte agissant sur l'organe de sollicitation (82) du deuxième embrayage multidisques humide (74) et la force du fluide sous pression agissant sur cet organe de sollicitation (82) sont adaptées l'une à l'autre et d'autre part la précontrainte agissant sur l'organe de sollicitation (80) du premier embrayage multidisques humide (18) et la force du fluide sous pression agissant sur cet organe de sollicitation (80) sont adaptées l'une à l'autre, de telle sorte que lors de l'augmentation de la pression de fluide, le deuxième embrayage multidisques humide (74) soit amené dans un état au moins en partie débrayé et que dans le cas d'une continuation de l'augmentation de la pression de fluide, le premier embrayage multidisques humide (18) soit amené dans un état au moins en partie embrayé.
